# EUROPÄISCHE PATENTSCHRIFT

(11) **EP 3 069 592 B1**
(45) Veröffentlichungstag und Bekanntmachung des Hinweises auf die Patenterteilung: **19.09.2018**
(21) Anmeldenummer: 16160700.7
(22) Anmeldetag: 16.03.2016
(51) Int. Cl.: A01C 5/06, A01B 49/06, A01C 7/20

(54) **SÄMASCHINE**
SOWING MACHINE
SEMOIR

(30) Priorität: 19.03.2015 AT 1572015
(43) Veröffentlichungstag der Anmeldung: 21.09.2016
(73) Patentinhaber: Huber, Gregor, 8942 Wörschach (AT)
(72) Erfinder: Huber, Gregor, 8942 Wörschach (AT)
(74) Vertreter: Gibler & Poth Patentanwälte KG

(56) Entgegenhaltungen:
- EP-A1- 0 280 958
- EP-A1- 2 742 787
- EP-A1- 3 053 426
- GB-A- 2 400 296
- US-A- 4 265 186
- US-A1- 2007 245 939

## Beschreibung

Die Erfindung betrifft eine Sämaschine zum oberflächennahen Ausbringen von Saatgut gemäß dem Oberbegriff des Patentanspruches 1.

Es sind Sämaschinen bekannt, welche ausgebildet sind Saatgut oberflächlich mittels Breitsaat auszubringen. Ein derartiges Saatgut kann beispielsweise für einen Rasen vorgesehen sein, welche nicht in den Boden eingebracht werden sollen. Hierbei ist es bekannt mittels Zinken, beispielsweise bei einer Egge oder einem Striegler, den Boden oberflächlich aufzukratzen, bevor das Saatgut ausgebracht wird, um das Ergebnis der Aussaat zu verbessern.

Nachteilig daran ist, dass die Qualität der Bodenbearbeitung oder der Verschleiß der Maschine stark von der Bodenbeschaffenheit abhängt. Bei Bodenunebenheiten oder großen Steinen sind nur wenige Zinken mit dem Boden in Kontakt. Ebenfalls ist der Bodenkontakt bei Kurvenfahrten oftmals schlecht. Weiters können Steine die Zinken beschädigen, wodurch der Verschleiß der Sämaschine bei steinigen Böden hoch ist.

Aus der EP 0 280 958 A1 ist eine Drillmaschine bekannt, bei welcher knapp hinter dem Laufrad ein senkrechter und gefederter Hebel angeordnet ist. An der freien Spitze des Hebels sind eine Scharspitze und ein Saatgutauslasses angeordnet.

Aus der EP 2 742 787 A1 ist eine Drillmaschine mit Hackscharen bekannt, wobei die Öffnungen der Saatgutauslässe nach unten gerichtet sind.

Aus der US 2007/245939 A1 ist eine Sämaschine bekannt, wobei Saatgutleitungen mit den Zinken einer Egge verbunden sind. Die Zinken der Egge sind an den Zinkenträgern mittels Schenkelfedern federnd befestigt.

Aus der GB 2 400 296 A ist eine Drillmaschine mit Hackscharen bekannt, wobei die Öffnungen der Saatgutauslässe nach unten gerichtet sind.

Aus der US 4 265 186 A ist eine Sämaschine mit einer Vielzahl an, als gebogene Rohre ausgebildeten Saatgutauslässen bekannt.

Aus der EP 3 053 426 A1 ist eine Ausbringungsschar mit Scharspitzen bekannt. Die Scharspitze dringt für eine vorgebbare Tiefe in den Boden ein, um Saatgut aus dem Saatgutauslass innerhalb des Bodens abzulegen.

Aufgabe der Erfindung ist es daher eine Sämaschine der eingangs genannten Art anzugeben, mit welcher die genannten Nachteile vermieden werden können, welche einen geringen Verschleiß aufweist und eine optimale Bodenbearbeitung auch bei unebenem Boden garantiert.

Erfindungsgemäß wird dies durch die Merkmale des Patentanspruches 1 erreicht.

Dadurch ergibt sich der Vorteil, dass eine optimale Bodenbearbeitung für die Ausbringung von Saatgut wie Gräser für einen Rasen bereitgestellt werden kann, wobei der Verschleiß gering gehalten werden kann und welche auch bei unebenen Böden gut funktioniert. Hierbei werden die Zinken durch die Federn mit einem vordefinierten Anpressdruck auf den Boden angepresst, wodurch die Bedingungen gut vorgebbar sind. Weiters können durch die Federn Bodenunebenheiten gut ausgeglichen werden und die Zinken können Steine auch seitlich ausweichen. Dadurch wird der Verschleiß wesentlich reduziert, insbesondere da auch keine weiteren beweglichen Teile notwendig sind. Da die Zinken oberflächlich über den Boden gleiten ist auch der Kraftstoffverbrauch reduziert und Kurvenfahrten werden erleichtert.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform einer Sämaschine in einer axonometrischen Darstellung;
Fig. 2 die bevorzugte Ausführungsform einer Sämaschine in Seitenansicht;
Fig. 3 ein Detail der bevorzugten Ausführungsform einer Sämaschine in einer axonometrischen Darstellung;
Fig. 4 eine Zinke der bevorzugten Ausführungsform einer Sämaschine in Fahrtrichtung betrachtet;
Fig. 5 die Zinke der bevorzugten Ausführungsform einer Sämaschine in Seitenansicht; und
Fig. 6 die Zinke der bevorzugten Ausführungsform einer Sämaschine gegen die Fahrtrichtung betrachtet.

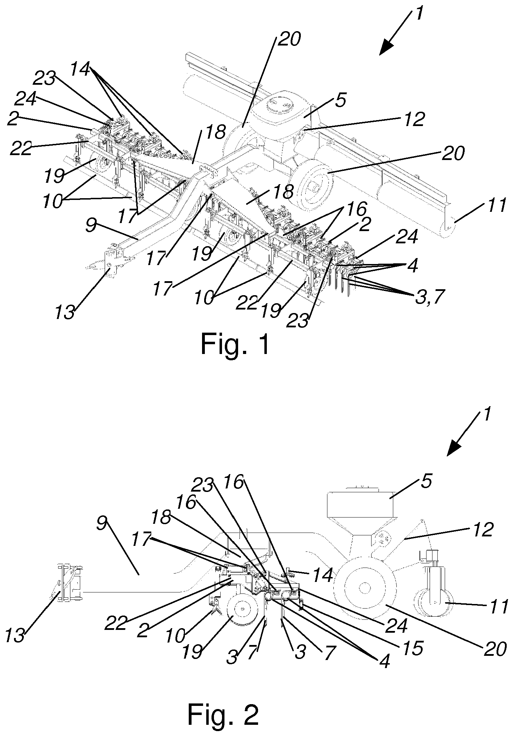

Die Fig. 1 bis 6 zeigen zumindest Teile einer Sämaschine 1 zum oberflächennahen Ausbringen von Saatgut, umfassend eine Saatgutausbringungsvorrichtung und wenigstens einen Zinkenträger 2, wobei mit dem Zinkenträger 2 eine Vielzahl an Zinken 3 zum Aufkratzen eines Bodens verbunden sind.

Eine Sämaschine 1 ist eine Vorrichtung zum Säen von Saatgut. Vorgesehen ist, dass die Sämaschine 1 ausgebildet ist Saatgut lediglich oberflächennah auszubringen und nicht in den Boden direkt einzubringen. Das oberflächennahe Ausbringen kann insbesondere dadurch erfolgen, dass das Saatgut nach der Aussaat nicht von Boden bedeckt wird. Ein derartige Saatgut kann insbesondere Saatgut für einen Rasen, bevorzugt eine Regelsaatgutmischung, sein. Derartiges Saatgut wird häufig mittels Breitsaat ausgebracht.

Die Sämaschine 1 weist eine Saatgutausbringungsvorrichtung auf, welche einen Saatgutbehälter 5 aufweist. Der Saatgutbehälter 5 kann mit einer Verteilvorrichtung verbunden sein, um das Saatgut auszubringen.

Die Sämaschine 1 weist weiters einen Zinkenträger 2 auf, mit welchem eine Vielzahl an Zinken 3 verbunden sind. Die Zinken 3 sind längliche Körper, vorzugsweise aus Metall, welche vorgesehen sind mit einem freien Ende mit dem Boden in Kontakt zu sein, um diesen aufzukratzen.

Vorgesehen ist, dass zumindest bei einer Mehrzahl der Zinken 3, bevorzugt alle Zinken 3, eine Feder 4 zwischen der Zinke und dem Zinkenträger 2 angeordnet ist. Eine Feder 4 ist ein Maschinenelement mit der Eigenschaft, sich unter der Einwirkung äußerer Kräfte elastisch zu verformen und die dabei aufgenommene Arbeit bei der Entlastung durch Rückfederung wieder abzugeben. Durch die Feder 4 ist die Zinke 3 gefedert mit dem Zinkenträger 2 verbunden.

Dadurch ergibt sich der Vorteil, dass eine optimale Bodenbearbeitung für die Ausbringung von Saatgut wie Gräser für einen Rasen bereitgestellt werden kann, wobei der Verschleiß gering gehalten werden kann und welche auch bei unebenen Böden gut funktioniert. Hierbei werden die Zinken 3 durch die Federn 4 mit einem vordefinierten Anpressdruck auf den Boden angepresst, wodurch die Bedingungen gut vorgebbar sind. Weiters können durch die Federn 4 Bodenunebenheiten gut ausgeglichen werden und die Zinken 3 können Steine auch seitlich ausweichen. Dadurch wird der Verschleiß wesentlich reduziert, insbesondere da auch keine weiteren beweglichen Teile notwendig sind. Da die Zinken 3 oberflächlich über den Boden gleiten ist auch der Kraftstoffverbrauch reduziert und Kurvenfahrten werden erleichtert.

Die Zinke 3 kann insbesondere über die Feder 4 mit dem Zinkenträger 2 verbunden sein.

Die Zinke 3 kann bevorzugt zusammen mit der Feder 4 eine Zinkeneinheit bilden, welche insbesondere einstückig ausgebildet sein kann.

Besonders bevorzugt kann vorgesehen sein, dass die Feder 4 eine Schenkelfeder ist. Die Schenkelfeder kann insbesondere mindestens drei Windungen aufweisen. Durch die Schenkelfeder kann auch bei einer großen Auslenkung der Zinke 3 ein definierter Anpressdruck gewährleistet werden.

Die Zinke 3 und die Feder 4 können insbesondere aus einem Stück ausgebildet sein. Insbesondere kann die Zinke 3 und die Feder 4 aus einem Draht geformt sein, wobei der Draht zur Ausbildung der Feder 4 gewunden ist.

Weiters kann vorgesehen sein, dass die Zinke 3 aus Federstahl ist.

Alternativ kann vorgesehen sein, dass die Feder 4 als elastischer Kunststoffkörper ausgebildet ist, und dass die Zinke über den elastischen Kunststoffkörper mit dem Zinkenträger 2 verbunden ist.

Gemäß einer nicht dargestellten Ausführungsform kann weiters vorgesehen sein, dass die Zinke 3 gelenkig mit dem Zinkenträger 2 verbunden ist, und dass die Feder 4 als Federung der gelenkigen Verbindung von Zinke 3 und Zinkenträger 2 ausgebildet ist.

Bevorzugt kann vorgesehen sein, dass die Feder 4 eine Auslenkung von bis zu 60° in eine Richtung ermöglicht.

Die Sämaschine 1 kann insbesondere als Anhänger ausgebildet sein, wie dies in Fig. 1 und 2 dargestellt ist. Dabei kann die Sämaschine 1 mittels einer Kupplung 13 an einem Zugfahrzeug befestigt werden.

Alternativ kann die Sämaschine 1 auch als Anbaugerät, beispielsweise für eine Dreipunktaufhängung, ausgebildet sein oder als selbstfahrende Maschine.

Der Zinkenträger 2 kann insbesondere Querträger 16 aufweisen, wobei die Zinken 3, insbesondere die Zinkeneinheiten, mit dem Querträger 16 verbunden sind. Insbesondere können mehrere parallel zueinander verlaufende Querträger 16 vorgesehen sein.

Die Zinkeneinheit kann insbesondere an einem ersten Ende eine Öse aufweisen, und mit der Öse an dem Zinkenträger 2 befestigt sein.

Die Zinke 3 kann insbesondere vorgebbar lösbar, bevorzugt mittels einer Schraubverbindung, mit dem Zinkenträger 2 verbunden sein. Dadurch können beschädigt Zinken 3 leicht ausgetauscht werden. Weiters können dadurch bereits bestehende Sämaschinen 1 einfach umgerüstet werden.

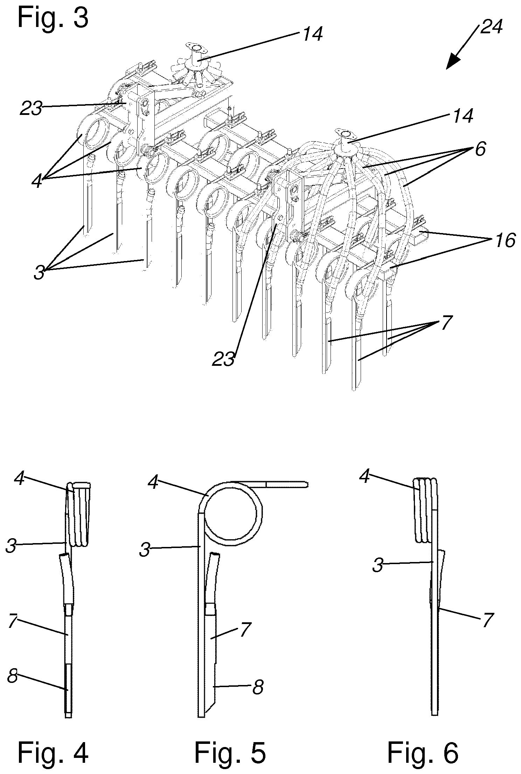

Es ist vorgesehen, dass die Saatgutausbringungsvorrichtung einen Saatgutbehälter 5 aufweist, dass der Saatgutbehälter 5 über Saatgutleitungen 6 mit Saatgutleitungsauslässen 7 verbunden ist, und dass wenigstens ein Saatgutleitungsauslass 7 an einer der Zinken 3 angebracht ist. Die Saatgutleitungen 6 sind in den Fig. 1 und 2 nicht, und in Fig. 3 nur teilweise dargestellt. Durch die Anordnung der Saatgutleitungsauslässe 7 an den Zinken 3 kann das Saatgut direkt auf den bearbeiteten Boden abgelegt werden. Ein weiterer Vorteil besteht darin, dass der Erfolg bei einer Übersaat über einen bereits bestehenden Rasen wesentlich gesteigert und dadurch der Saatgutbedarf hierbei verringert werden kann. Bei einer Übersaat bei einem bestehenden Rasen ist normalerweise das Problem, dass Direktsaatverfahren durch die damit verbundene Zerstörung des bestehenden Rasens nicht möglich sind, weshalb üblicherweise eine Breitsaat erfolgt. Bei der Breitsaat bleibt allerdings ein großer Anteil des Saatgutes auf der bereits bestehenden Pflanzendecke liegen, welcher dadurch verloren geht. Durch die an den vorgebbar gefederten Zinken 3 verbundenen Saatgutleitungsauslässen 7 kann nun das Saatgut unter der Pflanzendecke direkt auf den Boden aufgebracht werden, wobei allerdings ein bereits bestehender Rasen nicht zerstört wird. Das Saatgut wird weiterhin nur oberflächlich auf den Boden abgelegt und nicht in diesen injiziert. Dadurch können auf bestehende Rasenflächen, deren Bewuchsdichte sich mit der Zeit verringern kann, einfach erneut besät werden, wobei die Rasenflächen direkt nach der Aussaat wieder begehbar sind. Weiters wird dadurch das Ausbringungsverfahren windunabhängig.

Der Saatgutleitungsauslass 7 kann insbesondere mit der Zinke 3 verschraubt oder verschweißt sein.

Der Saatgutleitungsauslass 7 kann insbesondere aus Metall, bevorzugt Stahl, sein.

Alternativ kann der Saatgutleitungsauslass 7 insbesondere aus Kunststoff sein.

Die Sämaschine 1 kann eine vorgesehene Fahrtrichtung aufweisen. Die Fahrtrichtung entspricht hierbei der Richtung einer Geradeausfahrt. Die vorgesehene Fahrtrichtung kann insbesondere durch die Position der Kupplung 13, welche in Fahrtrichtung angeordnet ist, bestimmt sein. Weiters können bevorzugt Räder 20 der Sämaschine 1 die Fahrtrichtung bestimmen.

Insbesondere kann vorgesehen sein, dass der Saatgutleitungsauslass 7 an einer der Fahrtrichtung abgewandten Seite des Zinkens 3 angeordnet ist. Dies ist beispielhaft in den Fig. 4 bis 6 dargestellt.

Insbesondere kann ein Ende des Saatgutleitungsauslasses 7 im Wesentlichen auf der gleichen Höhe wie das freie Ende der Zinke 3 sein.

Das Ende des Saatgutleitungsauslasses 7 kann insbesondere abgeschrägt ausgebildet sein.

Bevorzugt kann vorgesehen sein, dass eine Außenbreite des Saatgutleitungsauslasses 7 im Wesentlichen gleich ist der Breite der Zinke 3. Dadurch ist der Saatgutleitungsauslass 7 durch die Zinke 3 vor Beschädigungen geschützt.

Es ist vorgesehen, das dass der wenigstens ein Saatgutleitungsauslass 7 an einer der Zinke 3 abgewandten Seite einen Schlitz 8 aufweist. Der Schlitz 8 verläuft im Wesentlichen parallel zu der Zinke 3. Der Schlitz 8 kann insbesondere eine Länge von mindesten 5 cm aufweisen. Durch den Schlitz 8 kann das Saatgut einfach aus dem Saatgutleitungsauslass 7 gleiten, wobei die Wahrscheinlichkeit einer Verstopfung des Saatgutleitungsauslass 7 verringert werden kann.

Insbesondere kann vorgesehen sein, dass an dem Zinkenträger 2 eine Saatgutleitungsverzweigung 14 angeordnet ist, dass die Saatgutleitungsverzweigung 14 eingangseitig mit dem Saatgutbehälter 5 verbunden ist, und dass die Saatgutleitungsverzweigung 14 ausgangsseitig mit mehreren Saatgutleitungsauslässen 7 verbunden ist. Hierbei können die Saatgutleitungen 6 in den Fig. nicht dargestellte Hauptleitungen umfassen, welche Hauptleitungen von dem Saatgutbehälter 5 zu den Saatgutleitungsverzweigungen 14 führen, und Nebenleitungen, welche von den Saatgutleitungsverzweigungen 14 zu den einzelnen Saatgutleitungsauslässen 7 führen. Dadurch kann die Anzahl der Saatgutleitungen 6 gering gehalten werden. In Fig. 1 sind lediglich die Saatgutleitungsverzweigung 14 eines Zinkenträgers 2 mit Bezugszeichen versehen.

Weiters kann vorgesehen sein, dass die Saatgutausbringungsvorrichtung wenigstens einen Prallteller 15 aufweist. Dadurch kann das Saatgut bei Bedarf mittels des Pralltellers 15 als Breitensaat ausgebracht werden.

Besonders bevorzugt kann vorgesehen sein, dass die Saatgutleitungen 6, insbesondere die Hauptleitungen, umsteckbar ausgebildet sind. Insbesondere können die Saatgutleitungen 6 lösbar befestigt ausgebildet sein. Bevorzugt können die Hauptleitungen der Saatgutleitungen 6 lösbar an den Saatgutleitungsverzweigungen 14 angesteckt sein, wodurch diese von den Saatgutleitungsverzweigungen 14 entfernt und an die Prallteller 15 angesteckt werden können. Derart kann die Sämaschine einfach ausgebildet sein, wobei zum Wechsel von der Aussaat über die Saatgutleitungsauslässen 7 zu einer Breitsaat über die Prallteller 15 schnell und einfach erfolgen kann.

Bevorzugt kann vorgesehen sein, dass der wenigstens eine Zinkenträger 2 beweglich mit einem Tragrahmen 9 der Sämaschine 1 verbunden ist. Der Tragrahmen 9 kann hierbei ein Rahmen, Kastenträger oder dergleichen sein, welcher einen tragenden Körper der Sämaschine 1 darstellt. An dem Tragrahmen 9 kann die Kupplung 13 befestigt sein. Dadurch kann der Zinkenträger 2 besser der Form des Bodens folgen.

Bevorzugt kann vorgesehen sein, dass der Zinkenträger 2 über ein Drehgelenk 17 mit dem Tragrahmen 9 verbunden ist, wobei eine Drehachse des Drehgelenkes 17 im Wesentlichen parallel zu der vorgesehenen Fahrtrichtung angeordnet ist.

Weiters kann vorgesehen sein, dass der Zinkenträger 2 über eine Haltevorrichtung 18 mit dem Tragrahmen 9 verbunden ist, und dass die Haltevorrichtung 18 an beiden Ende ein Drehgelenk 17 mit parallelen Drehachsen aufweist. Dadurch kann sich der Zinkenträger 2 heben und senken, ohne dabei quer zur Fahrtrichtung zu verkippen.

Insbesondere kann vorgesehen sein, dass an beiden Seiten des Tragrahmens 9 Zinkenträger 2 angeordnet sind. Wie bei der bevorzugten Ausführungsform dargestellt kann vorgesehen sein, dass zwei unabhängig voneinander bewegbare Zinkenträger 2 vorgesehen sind.

Insbesondere kann vorgesehen sein, dass - in Fahrtrichtung gesehen - vor den Zinken 3 wenigstens eine Planierschiene 10 angeordnet ist. In Geradeausfahrt der Sämaschine 1 können dadurch etwaige Erdhaufen auf dem Boden begradigt werden.

Die Planierschiene 10 kann insbesondere am Zinkenträger 2 befestigt sein.

Bevorzugt kann vorgesehen sein, dass die Planierschiene 10 sich über eine gesamte Länge des Zinkenträgers 2 erstreckt.

Besonders bevorzugt kann vorgesehen sein, dass der Zinkenträger 2 einen ersten Teil 22 und einen, über eine, insbesondere gefederte, Verstelleinrichtung 23 mit dem ersten Teil 22 verbundenen, zweiten Teil 24 umfasst, dass der erste Teil 22 eine Bodenkontakteinrichtung 19 aufweist, um einen Abstand des ersten Teils 22 zu einem Boden konstant zu halten, und dass die Zinken 3 mit dem zweiten Teil 24 verbunden sind. Durch die Verstelleinrichtung 23 kann die Position des zweiten Teils 24 mit den Zinken 3 vorgebbar gegenüber dem ersten Teil 22 verändert werden, welcher erste Teil über die Bodenkontakteinrichtung 19 einen konstanten Abstand zum Boden hält. Dadurch kann auch der Anpressdruck der Zinken 3 an den Boden an der Verstelleinrichtung 23 einfach eingestellt werden. In Fig. 3 ist lediglich der zweite Teil 24 des Zinkenträgers sowie ein Teil der Verstelleinrichtung 23 dargestellt.

Die Bodenkontakteinrichtung 19 kann insbesondere Tasträder umfassen.

Alternativ kann die Bodenkontakteinrichtung 19 feste Kufen umfassen.

Die Verstelleinrichtung 23 kann insbesondere als Parallelogrammführung ausgebildet sein, wodurch die Orientierung des ersten Teils 22 zu dem zweiten Teil 24 konstant bleibt.

Die Verstelleinrichtung 23 kann insbesondere gefedert ausgebildet sein. Hierbei kann eine Ruheposition des ersten Teils 22 zu dem zweiten Teil 24 der Verstelleinrichtung 23 vorgebbar eingestellt werden, wobei die Verstelleinrichtung 23 gefedert um die Ruheposition schwingen kann.

Alternativ kann die Verstelleinrichtung 23 fest, also ungefedert, ausgebildet sein.

Die Planierschiene 10 kann insbesondere am Zinkenträger 2, bevorzugt am ersten Teil 22 des Zinkenträgers 2, befestigt sein.

Besonders bevorzugt kann vorgesehen sein, dass - in Fahrtrichtung gesehen - nachfolgend zu den Zinken 3 eine Planierwalze 11 angeordnet ist. Die Planierwalze 11 kann insbesondere das ausgebrachte Saatgut an den Boden andrücken und derart für einen guten Bodenkontakt des Saatgutes sorgen.

Weiters kann vorgesehen sein, dass die Planierwalze 11 lösbar mit einer Aufhängung 12, insbesondere mit einer Dreipunktaufhängung, der Sämaschine 1 befestigt ist. Die Aufhängung 12 kann mit dem Tragrahmen 9 verbunden sein. Dadurch kann die Planierwalze 11 bei Bedarf abgehängt werden, wodurch das Gewicht der Sämaschine 1 gering gehalten und das Kurvenverhalten der Sämaschine 1 verbessert werden kann.

## Patentansprüche

1. Sämaschine (1) zum oberflächennahen Ausbringen von Saatgut, umfassend eine Saatgutausbringungsvorrichtung und wenigstens einen Zinkenträger (2), wobei mit dem Zinkenträger (2) eine Vielzahl an Zinken (3) zum Aufkratzen eines Bodens verbunden sind, wobei zumindest bei einer Mehrzahl der Zinken (3) eine Feder (4) zwischen der Zinke und dem Zinkenträger (2) angeordnet ist, wobei die Saatgutausbringungsvorrichtung einen Saatgutbehälter (5) aufweist, wobei der Saatgutbehälter (5) über Saatgutleitungen (6) mit Saatgutleitungsauslässen (7) verbunden ist, und wobei wenigstens ein Saatgutleitungsauslass (7) an einer der Zinken (3) angebracht ist, wobei der wenigstens ein Saatgutleitungsauslass (7) an einer der Zinke (3) abgewandten Seite einen Schlitz (8) aufweist, **dadurch gekennzeichnet, dass** der Schlitz (8) im Wesentlichen parallel zu der Zinke (3) verläuft.

2. Sämaschine (1) nach Anspruch 1, **dadurch gekennzeichnet, dass** die Feder (4) eine Schenkelfeder ist.

3. Sämaschine (1) nach Anspruch 1 oder 2, **dadurch gekennzeichnet, dass** die Zinke (3) aus Federstahl ist.

4. Sämaschine (1) nach einem der Ansprüche 1 bis 3, **dadurch gekennzeichnet, dass** der wenigstens eine Zinkenträger (2) beweglich mit einem Tragrahmen (9) der Sämaschine (1) verbunden ist.

5. Sämaschine (1) nach einem der Ansprüche 1 bis 4, **dadurch gekennzeichnet, dass** - in Fahrtrichtung gesehen - vor den Zinken (3) wenigstens eine Planierschiene (10) angeordnet ist.

6. Sämaschine (1) nach einem der Ansprüche 1 bis 5, **dadurch gekennzeichnet, dass** der Zinkenträger (2) einen ersten Teil (22) und einen, über eine, insbesondere gefederte, Verstelleinrichtung (23) mit dem ersten Teil (22) verbundenen, zweiten Teil (24) umfasst, dass der erste Teil (22) eine Bodenkontakteinrichtung (19) aufweist, um einen Abstand des ersten Teils (22) zu einem Boden konstant zu halten, und dass die Zinken (3) mit dem zweiten Teil (24) verbunden sind.

7. Sämaschine (1) nach einem der Ansprüche 1 bis 6, **dadurch gekennzeichnet, dass** - in Fahrtrichtung gesehen - nachfolgend zu den Zinken (3) eine Planierwalze (11) angeordnet ist.

8. Sämaschine (1) nach Anspruch 7, **dadurch gekennzeichnet, dass** die Planierwalze (11) lösbar mit einer Aufhängung (12), insbesondere mit einer Dreipunktaufhängung, der Sämaschine (1) befestigt ist.

## Claims

1. A seed drill (1) for the surface-proximal dispensing of seeds, comprising a seed dispensing device and at least one tine support (2), wherein a plurality of tines (3) for scratching open ground are connected to the tine support (2), wherein a spring (4) is arranged between the tine and the tine support (2) at least in the case of a plurality of the tines (3), wherein the seed dispensing device has a seed container (5), wherein the seed container (5) is connected via seed lines (6) to seed line outlets (7), and wherein at least one seed line outlet (7) is attached to one of the tines (3), wherein the at least one seed line outlet (7) has a slot (8) on a side facing away from the tine (3), **characterized in that** the slot (8) extends substantially parallel to the tine (3).

2. The seed drill (1) according to Claim 1, **characterized in that** the spring (4) is a leg spring.

3. The seed drill (1) according to Claim 1 on 2, **characterized in that** the tine (3) is made of spring steel.

4. The seed drill (1) according to any one of Claims 1 to 3, **characterized in that** the at least one tine support (2) is movably connected to a supporting frame (9) of the seed drill (1).

5. The seed drill (1) according to any one of Claims 1 to 4, **characterized in that** - viewed in the travel direction - at least one leveling bar (10) is arranged in front of the tines (3).

6. The seed drill (1) according to any one of Claims 1 to 5, **characterized in that** the tine support (2) comprises a first part (22) and a second part (24), which is connected to the first part (22) via an adjustment unit (23), which is spring-loaded in particular, the first part (22) has a ground contact unit (19) to keep a distance of the first part (22) from the ground constant, and the tines (3) are connected to the second part (24).

7. The seed drill (1) according to any one of Claims 1 to 6, **characterized in that** - viewed in the travel direction - a leveling roller (11) is arranged following the tines (3).

8. The seed drill (1) according to Claim 7, **characterized in that** the leveling roller (11) is detachably fastened to a hitch (12), in particular a three-point hitch, of the seed drill (1).

## Revendications

1. Semoir (1) pour la distribution de semences à proximité de la surface, comprenant un dispositif de sortie des semences et au moins un support de dents (2), dans lequel le support de dents (2) est relié à plusieurs dents (3) destinées à griffer le sol, dans lequel un ressort (4) est disposé, au moins sur plusieurs des dents (3), entre la dent et le support de dents (2), dans lequel le dispositif de sortie des semences comporte un réservoir de semences (5), dans lequel le réservoir de semences (5) est relié par des conduites de semences (6) à des sorties de conduites de semences (7) et dans lequel au moins une sortie de conduite de semences (7) est disposée sur l'une des dents (3), l'au moins une sortie de conduite de semences (7) présentant une fente (8) sur un côté tourné à l'opposé de la dent (3), **caractérisé en ce que** la fente (8) est sensiblement parallèle à la dent (3).

2. Semoir (1) selon la revendication 1, **caractérisé en ce que** le ressort (4) est un ressort à branches.

3. Semoir (1) selon la revendication 1 ou 2, **caractérisé en ce que** la dent (3) est faite d'acier à ressorts.

4. Semoir (1) selon l'une des revendications 1 à 3, **caractérisé en ce que** l'au moins un support de dents (2) est relié de façon mobile à un cadre porteur (9) du semoir (1).

5. Semoir (1) selon l'une des revendications 1 à 4, **caractérisé en ce qu'**au moins un rail niveleur (10) est disposé avant les dents (3) dans le sens de la marche.

6. Semoir (1) selon l'une des revendications 1 à 5, **caractérisé en ce que** le support de dents (2) comprend une première partie (22) et une deuxième partie (24) reliée à la première partie (22) par un dispositif d'ajustement (23), en particulier suspendu sur ressorts, **en ce que** la première partie comprend un dispositif de contact avec le sol (19) afin de garder constante la distance entre la première partie (22) et le sol, et **en ce que** les dents (3) sont reliées à la deuxième partie (24).

7. Semoir (1) selon l'une des revendications 1 à 6, **caractérisé en ce qu'**un rouleau niveleur (11) est disposé après les dents (3) dans le sens de la marche.

8. Semoir (1) selon la revendication 7, **caractérisé en ce que** le rouleau niveleur (11) est relié de façon amovible à un accrochage (12), en particulier un accrochage en trois points, du semoir (1).
